(19) Europäisches Patentamt
European Patent Office
Office européen des brevets

(11) **EP 2 439 973 B1**

(12) **EUROPEAN PATENT SPECIFICATION**

(45) Date of publication and mention
of the grant of the patent:
**28.11.2018 Bulletin 2018/48**

(51) Int Cl.:
**H04W 24/00** (2009.01)      **H04W 74/00** (2009.01)
**H04W 74/08** (2009.01)

(21) Application number: **09847014.9**

(22) Date of filing: **25.12.2009**

(86) International application number:
**PCT/CN2009/076042**

(87) International publication number:
**WO 2011/003263 (13.01.2011 Gazette 2011/02)**

(54) **DETECTION METHOD AND APPARATUS BASED ON RANDOM ACCESS PROCESS**

DETEKTIONSVERFAHREN UND VORRICHTUNG AUF DIREKTZUGRIFFSBASIS

PROCÉDÉ ET APPAREIL DE DÉTECTION BASÉS SUR UN PROCESSUS D ACCÈS ALÉATOIRE

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**

(30) Priority: **06.07.2009   CN 200910158908**

(43) Date of publication of application:
**11.04.2012   Bulletin 2012/15**

(73) Proprietor: **ZTE Corporation
Shenzhen, Guangdong 518057 (CN)**

(72) Inventor: **LI, Bin
Shenzhen
Guangdong 518057 (CN)**

(74) Representative: **V.O.
P.O. Box 87930
2508 DH Den Haag (NL)**

(56) References cited:
**EP-A1- 1 605 710      CN-A- 1 533 199
CN-A- 101 295 999      US-A- 6 167 037
US-A1- 2008 165 903      US-A1- 2008 165 903**

**Description**

**TECHNICAL FIELD**

The disclosure relates to the field of communications, in particular to a detection method and a detection apparatus based on a random access process.

**BACKGROUND**

Random access is an access process before a User Equipment (UE) starts to communicate with a network. In a Long Term Evolution (LTE) system, the random access can be classified into two types: synchronized random access and non-synchronized random access. When the UE has obtained uplink synchronization with the system, the random access process of the UE is known as synchronized random access; when the UE has not obtained the uplink synchronization with the system yet or has lost the uplink synchronization, the random access process of the UE is known as non-synchronized random access. Since the UE has not obtained accurate uplink synchronization yet when performing the non-synchronized random access, a main characteristic that distinguishes non-synchronized random access from synchronized random access is that non-synchronized random access requires estimation and adjustment of an uplink transmitting clock of the UE so as to control a synchronization error within the length of a cyclic prefix (CP).

Generally speaking, the UE performs downlink synchronization through a Synchronization Channel (SCH) firstly after turned on so as to obtain a ratio frame number, a receiving position of a subframe and an Identifier (ID) of a cell; then the UE detects a Broadcast Channel (BCH) so as to obtain system information, wherein the system information includes configuration information of a Random Access Channel (RACH); finally, the UE performs uplink synchronization through the RACH channel to complete the process of accessing the system, and the process belongs to the non-synchronized random access.

Preamble sequences for uplink random access are provided in a 3rd Generation Partnership Project (3GPP) Long Term Evolution (LTE) protocol. During the process of uplink synchronization transmission, the UE obtains a position of the RACH according to the ratio frame and the position of the subframe determined by the downlink synchronization, one sequence is selected from the available sequences in random to be transmitted as a preamble and is detected through a base station so as to determine a timing adjustment quantity of the uplink synchronization and the timing adjustment quantity is transmitted to the UE; and the UE adjusts uplink data transmitting time according to the sent timing adjustment quantity so as to realize time synchronization of the uplink channel.

The preamble sequence of uplink random access specified in the LTE protocol is a Zadoff-Chu (ZC) sequence, and the uth root ZC sequence is defined as:

$$x_u(n) = e^{-j\frac{\pi u n(n+1)}{N_{ZC}}}, \quad 0 \le n \le N_{ZC} - 1$$

where u refers to an index number of the root sequence, and $N_{zc}$ refers to a ZC sequence length, which is a prime number, and it is specified in the LTE protocol that the value of $N_{zc}$ is 839 or 139.

In the LTE system, 64 sequences for a preamble code are allocated for each cell, which may be different cyclic shift sequences of one root sequence or different cyclic shift sequences of different root sequences. ZC root sequences and the cyclic shift sequences thereof have favourable self correlation characteristics of their own, and different sequences thereof are less correlated, so that the base station can perform time-domain correlation detection of a random access signal according to the correlation characteristics of the ZC sequence so as to obtain an uplink timing synchronization adjustment quantity.

The method of time-domain correlation detection comprises: a received signal and the complex conjugate of each cyclic shift of a local sequence are dot-multiplied and summed up to obtain the time-domain correlation values of all cyclic shift sampling points; according to Inverse Discrete Fourier Transformation (IDFT) characteristics, the process is equivalent to: the received frequency-domain signal and the complex conjugate of the local frequency-domain sequence are dot-multiplied then transformed into time-domain; and the mathematical form of time-domain correlation detection is as follows:

provided that the time-domain form of the received signal is y(m), the frequency-domain form of the received signal is Y(k), the time-domain form of the local sequence is x(m), and the frequency-domain form of the local sequence is X(k), then a time-domain correlation function R(m) is expressed as:

$$R(m) = \sum_{n=0}^{N_{zc}-1} x^*(n) \cdot y(m+n) = \frac{1}{N_{zc}} \sum_{k=0}^{N_{zc}-1} X^*(k) \cdot Y(k) \cdot e^{j\frac{2\pi km}{N_{zc}}}$$

where m refers to a cyclic shift point, and * refers to complex conjugate.

Therefore, for the UE adopting different cyclic shifts of one root sequence as the preamble code, the received signal is transformed into frequency-domain and complex conjugate dot-multiplied with the frequency-domain sequence of the sequence by the base station, and the result is transformed into time-domain through IDFT, so that time-domain correlation values corresponding to all cyclic shift sampling points can be obtained. The preamble code used by the UE can be determined and a timing advance quantity of the UE can be obtained through peak detection of the time-domain correlation values corresponding to the cyclic shift sampling points of the local root sequence.

The performance of the RACH time-domain correlation detection can be characterized by a missed-detection probability and a false-alarm probability, wherein the false-alarm probability refers to a probability that a preamble code is falsely detected under the condition that no preamble code is transmitted, and the missed-detection probability refers to a probability that a transmitted preamble code is not detected. Generally, it is required that the false-alarm probability is no greater than $10^{-3}$.

In the detection according to the above RACH time-domain detection method, both the false-alarm probability and the missed-detection probability are determined by a threshold in a peak detection algorithm. Generally, in the peak detection algorithm, a ratio of a random signal correlation value and a noise power estimation value is taken as the threshold, therefore in this detection algorithm, the accuracy of the noise power estimation value has great influence to the performance of the detection algorithm.

Besides, since there is certain frequency deviation in the LTE system, a restricted set of the preamble code is specified in the LTE protocol for the condition of larger frequency deviation, so that the false-alarm probability is reduced, however, for a low or middle speed cell using an unrestricted set, the false-alarm probability will be increased due to a Doppler frequency deviation caused by user speed, especially, under the condition of frequency deviation and a high noise-to-signal ratio, the increasing of the false-alarm probability may cause the increasing of a signalling overhead of the random process, and the processing load of a system is increased. Therefore, it is necessary to restrain the false alarm under this condition.

Besides, the RACH sequence length is a prime number, and the complexities of Discrete Fourier Transformation (DFT) and IDFT of a prime number are high, therefore in general realization, Fast Fourier Transformation (FFT) and Inverse Fast Fourier Transformation (IFFT) in the form of second power is adopted to replace the DFT and IDFT processing. In order to ensure no loss of information, the value of the second power must be greater than the ZC sequence length, so over-sampling will be introduced in time-domain correlation arithmetic. The over-sampling technology can reduce the realizing complexity and improve the time-domain resolution, but it may also cause energy spread of the correlation points and reduce the self-correlation characteristic of the preamble sequence, thereby causing the increasing of the false-alarm probability.

To sum up, the RACH detection algorithm of the prior LTE system has the defects of the increasing of the false-alarm probability under the condition of frequency deviation and high signal-to-noise ratio and because of the adoption of the over-sampling technology; besides, the noise power is required to be estimated accurately and quickly, so the realization complexity is high.

It is noted that European Patent publication EP 1 605 710 discloses a method of detecting random access of the user equipment, which method is applied to a mobile communication system composed of a base station and a set of user equipments, in which the base station and the user equipments using a set of N orthogonal or quasi-orthogonal pseudorandom sequence number for random accessing. The method comprises the steps of: correlating the concurrent received random access signals with each pseudorandom sequence number by means of the base station, so as to obtain the respective correlated windows; finding the point with maximum peak value in correlated windows, and thus achieving the correlated peak windows and the front and backside windows on its both side; giving one or more thresholds, and comparing the thresholds with the correlated results in the correlated maximum peak windows as well as front and backside windows in accordance with one or more conditions, if the conditions is met, determining the pseudorandom sequence numbers which participated the correlating operation of the correlated windows in the above step is the pseudorandom sequence number that accessing user selected at that point, and thereby detecting each random access terminals.

It is noted that American patent publication US 6 167 037 discloses achieving high speed spreading code synchronization of a forward link control channel. A control channel information signal and traffic channel information signals are each spread by different first spreading codes which are fed from a first spreading code (short code) generator 11, and which have a period equal to the period of an information symbol. Subsequently, only the control channel information signal is spread by a third spreading code which is fed from a third spreading code (long code masked portion complex conjugate code) generator 12, and which has a form of complex conjugate of a long code (second spreading code) used for spreading in common. The signals of the entire channels are summed up by an adder 13 at appropriate timings, and the resultant sum is spread by the second spreading code fed from a second spreading code generator 14, thereby being output as a spread modulation signal.

It is noted that American patent publication US 2008/165903 discloses a detect decision made by non-coherently combining results from correlating a preamble CAZAC sequence with base/root sequences used in the cell and setting a detection threshold based on those combined results. Another threshold can be set based on coherently combining results from correlating the preamble sequence, in which case the detect decision is based on satisfying either one of the thresholds. Where the sequence repeats in the same preamble, the results that are combined are from correlating the first instance of the CAZAC sequence and from correlating the second instance of the CAZAC sequence. Where the sequence does not repeat, different segments of the CAZAC sequence, each less than the whole and not necessarily of the same length, are correlated for a partial correlation on each segment, then the segments are combined and used to set the detection threshold. Detection may be done in stages, adjusting the threshold after the first stage based on comparing the results of non-coherent and coherent combining.

## SUMMARY

The disclosure aims to provide a detection method and a detection apparatus based on a random access process, which can reduce a false-alarm probability of the detection, provide accurate and reliable uplink timing adjustment information for a UE so as to improve the reliability of accessing of the UE to a Long Term Evolution (LTE) system, and lower a signalling overhead caused by the false alarm.

The features of the method and device according to the present disclosure are defined in the independent claims, and preferable features according to the present invention are defined in the dependent claims.

According to the disclosure, the detection method and detection apparatus based on the random access process have advantages as follows:

the noise power estimation mean value is calculated through the method of calculating window by window first and then working out the mean value, so that the problem can be effectively avoided that the noise power is calculated inexactly due to different signal to noise ratios when a plurality of users select different cyclic shifts of the same root sequence at the same time;

an accurate value of the detection threshold is obtained through theoretical calculation according to the distribution character of the noise power, so that the requirements of a protocol to the false-alarm probability of the random access can be fully satisfied; and

the second detection threshold is added for continuous windows satisfying the first detection threshold, so that the problem that the false-alarm probability increases due to the over-sampling under the condition of high signal-to-noise ratio is avoided, and the false-alarm probability of a system to the preamble code is lowered.

## BRIEF DESCRIPTION OF THE DRAWINGS

Fig. 1 shows a flow diagram of a detection method based on a random access process according to the disclosure;

Fig. 2 shows a block diagram of a baseband processing module at an RACH signal transmitting terminal specified in an LTE protocol;

Fig. 3 shows a flow diagram of a detection method used for a random access process of an LTE system according to an embodiment of the disclosure;

Fig. 4 shows a structure diagram of a detection apparatus based on a random access process according to the disclosure; and

Fig. 5 shows a preferred structure diagram of a detection apparatus based on a random access process used for an LTE ratio communication system according to another embodiment of the disclosure.

**DETAILED DESCRIPTION**

Next, preferred embodiments of the disclosure are explained in combination with the drawings. It should be appreciated that the preferred embodiments described here are only used for explaining and illustrating the disclosure rather than limiting the disclosure.

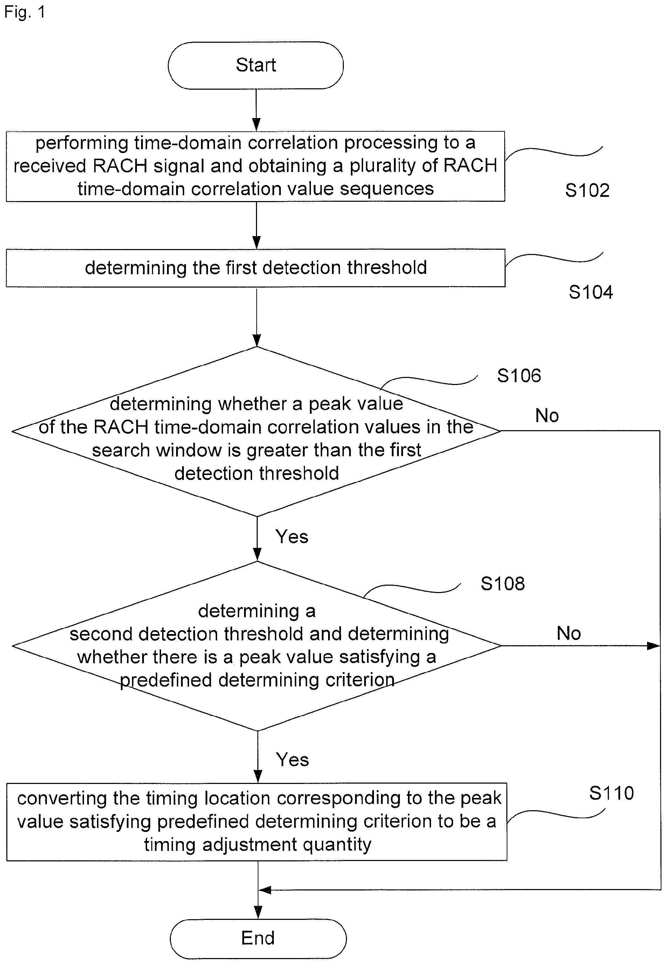

The disclosure provides a detection method based on a random access process. Fig. 1 shows a flow diagram of a detection method based on a random access process according to the disclosure; as shown in Fig. 1, the detection method comprises the following steps.

Step S102: performing time-domain correlation processing to a received RACH signal and a local root sequence to obtain a plurality of RACH time-domain correlation value sequences.

Specifically, the step of performing time-domain correlation processing to the received RACH signal and the local root sequence to obtain a plurality of the RACH time-domain correlation value sequences generally comprises: performing down-sampling processing to the received RACH signal; performing Discrete Fourier Transformation (DFT) to the data after the down-sampling processing to obtain frequency-domain RACH receiving data; performing complex conjugate dot-multiplying of the frequency-domain RACH receiving data with the local frequency-domain root sequence and then performing Inverse Discrete Fourier Transformation (IDFT) to obtain a plurality of the RACH time-domain correlation value sequences.

Step S104: determining a noise power estimation mean value $P_i^{noise}$ corresponding to each RACH time-domain correlation value sequence or a maximum peak value $P_i^{peak}$ of the correlation value sequence and calculating a corresponding first detection threshold $Th_i^1$ according to either of the values, wherein $Th_i^1 = \beta \cdot P_i^{noise}$, $\beta$ is a factor greater than 1, $i = 1, \cdots L$, and $L$ refers to a number of the root sequences.

Here, calculating the first detection threshold $Th_i^1$ according to the noise power estimation mean value $P_i^{noise}$ is: calculating the first detection threshold according to a formula of $Th_i^1 = \beta \cdot P_i^{noise}$, where $i = 1, \cdots L$, $L$ refers to a number of the root sequences, and $\beta$ refers to a noise threshold factor greater than 1, the value of which is determined according to a predefined false-alarm probability and a chi-square distribution character.

Calculating the first detection threshold $Th_i^1$ according to the maximum peak value $P_i^{peak}$ of the correlation value sequence is: calculating the first detection threshold according to a formula of $Th_i^1 = \lambda \cdot P_i^{peak}$, where $\lambda$ refers to a peak value threshold and a value span of $\lambda$ is $0 < \lambda < 1$.

Under the condition of calculating the first detection threshold $Th_i^1$ according to the noise power estimation mean value $P_i^{noise}$, the step of determining the noise power estimation mean value $P_i^{noise}$ generally comprises: dividing the RACH time-domain correlation value sequence into $N$ search windows according to a formula of

$$N = \left\lfloor \frac{\text{sequence length}}{Ncs} \right\rfloor,$$ where $Ncs$ refers to a predefined window length parameter; seeking the peak value of the RACH time-domain correlation values in each search window, and calculating a mean value of the RACH time-domain correlation values which are less than $\alpha$ times of the peak value to obtain a noise temporary mean value $\widetilde{P}_{i,j}^{noise}$, where $i = 1, \cdots L$, and $L$ refers to the number of the root sequences, j = 1, $\cdots$, $N$, $N$ refers to a number of the search windows, and $0 < \alpha < 1$; and calculating a mean value of the noise temporary mean values obtained in all the search windows of the RACH time-domain correlation value sequence to obtain the noise power estimation mean value $P_i^{noise}$, wherein $i = 1, \cdots, L$, and $L$ refers to the number of the root sequences.

Step S106: for each search window of the RACH time-domain correlation value sequence, if a peak value of the RACH time-domain correlation values is greater than the corresponding first detection threshold $Th_i^1$, recording the peak value and a location thereof and executing step 108; otherwise, ending the process.

Step 108: for the search windows of each RACH time-domain correlation value sequence, if there are one or more sets of continuous search windows which all have the peak values greater than the first detection threshold, determining whether the peak values of the search windows are greater than a corresponding second detection threshold

$Th_{k,i}^2$, if yes, executing step 110; otherwise, ending the process; wherein $Th_{k,i}^2 = \gamma \cdot R_{peak}^k$, $R_{peak}^k$ refers to a maximum value of all the peak values of the search windows, $0 \le \gamma \le 1$, $i = 1, \cdots, L$, $L$ refers to a number of root sequences, $k = 1, \cdots, K$, and $K$ refers to a number of the sets of the continuous search windows.

Step S110: converting the timing location corresponding to the peak value greater than the corresponding second detection threshold to be a timing adjustment quantity.

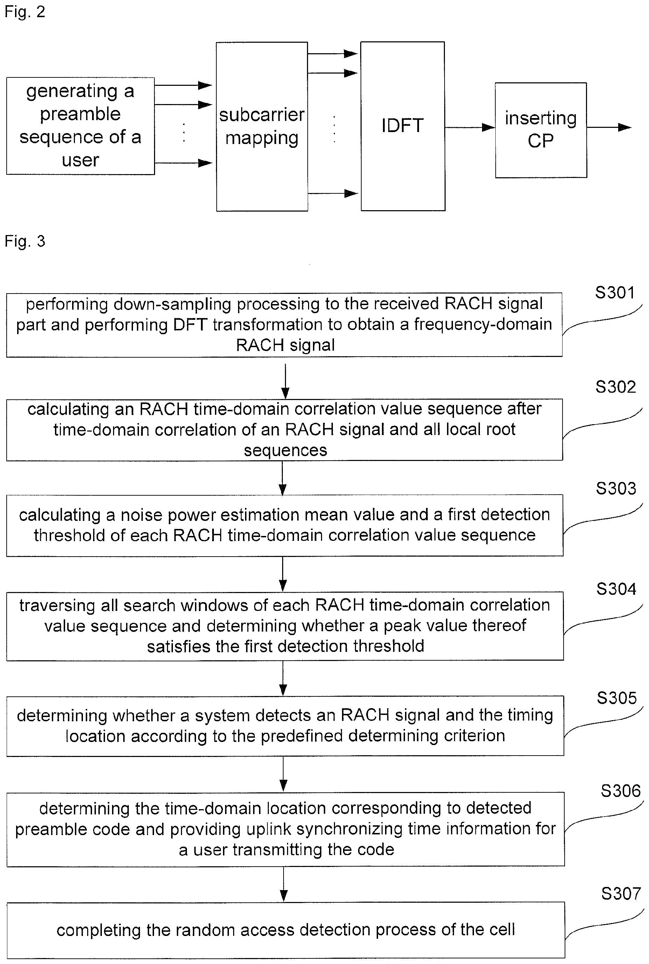

Fig. 2 shows a block diagram of a baseband processing module at an RACH signal transmitting terminal specified in a Long Term Evolution (LTE) protocol; as shown in Fig. 2, a transmitting terminal generates a preamble sequence (which is specified to be a ZC sequence in the protocol) of user information firstly, then subcarrier mapping is performed, Orthogonal Frequency Division Multiplexing (OFDM) modulation is implemented through Inverse Discrete Fourier Transformation (IDFT), a cyclic prefix (CP) is added and the baseband processing procedure at the transmitting terminal is accomplished.

It is specified in the LTE standard that the band width which an RACH signal occupies on a frequency domain is 1.08 MHz, and the sub-carrier interval of each RACH is 1.25 KHz or 7.5 KHz, so there are 864 or 144 RACH sub-carriers in the frequency band range, wherein 839 or 139 sub-carriers are used for bearing the RACH data and serve as containing bands. It is also specified in the standard that the time-domain format of the RACH signal is: the preamble code of the RACH follows the cyclic prefix (CP), and a guard interval follows the preamble code of the RACH, wherein no signal is transmitted within the guard interval. Next, a detection process of the RACH signal in an LTE ratio communication system according to the detection method of the disclosure is explained by taking a preamble sequence signal of format 1 with the ZC sequence length of 839 and the detection window length of 13 as a specific embodiment.

Fig. 3 shows a flow diagram of a detection method used for a random access process of an LTE system according to an embodiment of the disclosure. It should be noted that, in the flow diagram, only a preferred method of calculating according to the noise power and the corresponding noise threshold factor is taken as an example for calculating the first detection threshold. As shown in Fig. 3, the detection method includes the following steps.

Step S301: extracting an RACH signal part of a received signal by a base station, performing down-sampling after removing a CP through time domain, and obtaining frequency-domain RACH signals therein through DFT.

Step S302: traversing all local frequency-domain root sequences allocated to a current cell, performing complex conjugate dot-multiplying of the frequency-domain RACH signals with each local frequency-domain root sequence sequentially, and transforming the frequency-domain RACH signal into time domain through IDFT processing to obtain a plurality of corresponding RACH time-domain correlation value sequences, wherein the RACH time-domain correlation value described here is a power value actually.

Step S303: for each RACH time-domain correlation value sequence obtained in step S302, determining a corresponding noise power estimation mean value and a corresponding first detection threshold.

In the embodiment, for each RACH time-domain correlation value sequence, the corresponding specific algorithm of the noise power estimation mean value is:

firstly, dividing the RACH time-domain correlation value sequence into $N$ search windows, wherein specifically, the search window length is 13 in the embodiment, and the number of the search windows is $N = \left\lfloor \dfrac{839}{13} \right\rfloor = 64$; then

seeking a peak value of the RACH time-domain correlation values in each search window, and calculating a mean value of the correlation values which are less than $\alpha(0 \le \alpha \le 1)$ times of the peak value to obtain a noise temporary mean value $\tilde{P}_{i,j}^{noise}$ of the search window, where $i = 1, \cdots L$, $j = 1, \cdots, N$, and $L$ refers to the number of the root sequences.

Next, calculating a mean value of the noise temporary mean value obtained in all the search windows of the RACH time-domain correlation value sequence to obtain the corresponding noise power estimation mean value is:

$$P_i^{noise} = \frac{1}{N} \sum_{j=1}^{N} \tilde{P}_{i,j}^{noise}, \ i = 1, \cdots, L.$$

In the embodiment, only the preferred method of calculating a first detection threshold according to the noise power and the corresponding noise threshold factor is taken as an example. For each RACH time-domain correlation value sequence, the specific algorithm for calculating the first detection threshold corresponding is as follows:

when the condition that the false-alarm probability is $10^{-3}$ as an example is satisfied, according to that the distribution of the noise power is complied with the chi-square distribution, the first predefined threshold value $\beta(\beta > 1)$ is calculated theoretically, so that the corresponding first detection threshold $Th_i^1$ is:

$$Th_i^1 = \beta \cdot P_i^{noise}$$

specifically, in the embodiment, $\beta$ = 5dB.

Of course, similarly with the prior art, the value of $\beta$ can be an empirical value within the range above.

Step S304: for each RACH time-domain correlation value sequence, traversing all the search windows, detecting the peak value of correlation values of each search window, and if the detected result is greater than the first detection threshold, recording the correlation peak value satisfying the first detection threshold and the location thereof; otherwise, it is indicated that there is no available RACH signal in the current window.

Step S305: for each RACH time-domain correlation value sequence, determining a timing location of an initial point to send the preamble according to a predefined determining criterion, specifically, determining that a system finds out an RACH signal and the timing location thereof if the determining criterion is satisfied; otherwise, determining that there is no available RACH signal in the search window.

In this step, the predefined determining criterion is as follows:

for all the search windows of each RACH time-domain correlation value sequence, if there are one or more sets of continuous search windows which all have the peak values greater than the first detection threshold, choosing a maximum value $R_{peak}^{k,i}$ of the peak values of the continuous windows, and taking $\gamma$ times of the maximum value as a second detection threshold $Th_{k,i}^2$ :

$$Th_{k,i}^2 = \gamma \cdot R_{peak}^{k,i}$$

where $k = 1,\cdots,K$, $K$ refers to a number of the sets of such continuous windows in the $i^{th}$ RACH time-domain correlation value sequence, and $\gamma$ refers to a second predefined threshold value and $0 \le \gamma \le 1$.

As a matter of clearness, the described "there are one or more sets of continuous search windows" is illustrated, for example, a certain RACH time-domain correlation value sequence includes 10 search windows, wherein the peak values of the first and the second search windows are both greater than the corresponding first detection threshold, and the peak values of the fifth, the sixth and the seventh search windows are all greater than the first detection threshold, but the peak values of the other five search windows are all less than the first detection threshold, then it is indicated that there are two sets of continuous search windows conforming to the requirements in the 10 search windows of the RACH time-domain correlation value sequence, namely, $k = 2$ in this case.

Next, determining whether all correlation peak values in all the K sets exceeding the corresponding first detection threshold exceeds the corresponding second detection threshold, and recording the correlation peak value exceeding the second detection threshold and the timing location thereof; otherwise, it is indicated that there is no available RACH signal in the current window.

Step S306: converting the timing location corresponding to the peak value satisfying the detection condition (the determining criterion) in step S305 to be a timing adjustment quantity and providing uplink synchronizing time information to a user transmitting the preamble code.

Step S307: completing the RACH preamble detection process of the cell.

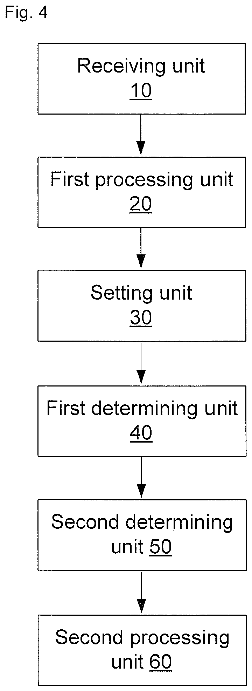

The disclosure further provides a detection apparatus based on a random access process. Fig. 4 shows a structure diagram of a detection apparatus based on a random access process according to the disclosure; as shown in Fig. 4, the apparatus comprises:

a receiving unit 10, used for receiving an RACH signal through a radio channel;

a first processing unit 20, connected to the receiving unit 10 and used for performing time-domain correlation to the RACH signal from the receiving unit 10 and a local root sequence to obtain a plurality of RACH time-domain correlation value sequences;

a setting unit 30, connected to the first processing unit 20 and for each RACH time-domain correlation value sequence from the first processing unit 20, used for determining a corresponding noise power estimation mean value $P_i^{noise}$ or a maximum peak value $P_i^{peak}$ of the correlation value sequence, and calculating a corresponding first detection threshold $Th_i^1$ according to either of the values, wherein $Th_i^1 = \beta \cdot P_i^{noise}$ , $\beta$ is a factor greater than 1, $i =$

$1, \cdots L$, and $L$ refers to a number of the root sequences;

a first determining unit 40, connected to the setting unit 30 and for each search window of each RACH signal time-domain correlation value sequence, if the peak value of the RACH time-domain correlation values is greater than the first detection threshold $Th_i^1$ obtained by the setting unit 30, used for recording the peak value and the location thereof;

a second determining unit 50, connected to the first determining unit 40 and used for processing the peak value from the first determining unit 40, specifically, for all the search windows of each RACH signal time-domain correlation value sequence, if there are one or more sets of continuous search windows which have the peak values greater than the corresponding first detection threshold, determining whether the peak values of the search windows are greater than a corresponding second detection threshold $Th_{k,i}^2$, wherein $Th_{k,i}^2 = \gamma \cdot R_{peak}^k$, $R_{peak}^k$ refers to a maximum value of peak values of the search windows, $0 \le \gamma \le 1$, $i = 1, \cdots, L$, $L$ refers to a number of root sequences, $k = 1, \cdots, K$, and $K$ refers to a number of the sets of the continuous search windows; and

a second processing unit 60, connected to the second determining unit 50 and used for converting the timing location corresponding to the peak value greater than the corresponding second detection threshold determined by the second determining unit 50 to be a timing adjustment quantity.

Calculating the first detection threshold $Th_i^1$ according to the noise power estimation mean value $P_i^{noise}$ by the setting unit is: calculating the first detection threshold according to a formula of $Th_i^1 = \beta \cdot P_i^{noise}$ by the setting unit, where $i = 1, \cdots L$, $L$ refers to the number of the root sequences, and $\beta$ refers to a noise threshold factor greater than 1.

Calculating the first detection threshold $Th_i^1$ according to the maximum peak value $P_i^{peak}$ of the correlation value sequence by the setting unit is: calculating the first detection threshold according to a formula of $Th_i^1 = \lambda \cdot P_i^{peak}$ by the setting unit, where $\lambda$ refers to a peak value threshold and a value span of $\lambda$ is $0 < \lambda < 1$.

Next, a detection process of the RACH signal in an LTE ratio communication system according to the detection method of the disclosure is explained by taking a preamble sequence signal of format 1 with the ZC sequence length of 839 and the detection window length of 13 as a specific embodiment.

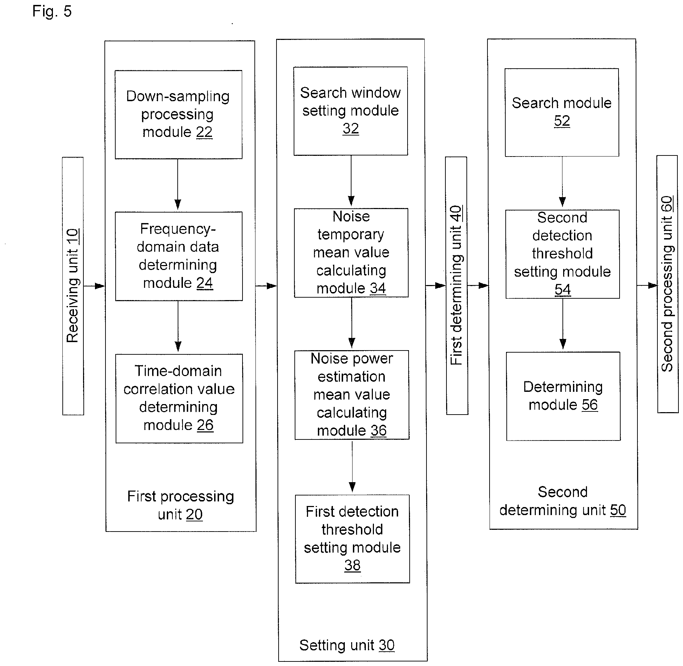

Fig. 5 shows a preferred structure diagram of a detection apparatus based on a random access process used for an LTE ratio communication system according to another embodiment of the disclosure. As shown in Fig. 5, the structure diagram is basically the same with that shown in Fig. 4, and the difference is:
the first processing unit 20 comprises:

a down-sampling processing module 22, used for performing down-sampling processing to the received RACH signal after removing a CP through time domain;

a frequency-domain data determining module 24, connected to the down-sampling processing module 22 and used for performing Discrete Fourier Transformation (DFT) to the data after the down-sampling processing to obtain frequency-domain RACH receiving data; and

a time-domain correlation value determining module 26, connected to the frequency-domain data determining module 24 and used for traversing all the local frequency-domain root sequences allocated to the current cell, and performing complex conjugate dot-multiplying of the frequency-domain RACH receiving signals from the frequency-domain data determining module 24 with each local frequency-domain root sequence sequentially and then transforming the frequency-domain RACH signals to time-domain through Inverse Discrete Fourier Transformation (IDFT) to obtain a plurality of corresponding RACH time-domain correlation value sequences, wherein the RACH time-domain correlation value described here is a power value actually.

The setting unit 30 comprises:

a search window setting module 32, used for dividing each RACH time-domain correlation value root sequence into

$N$ search windows, wherein the window length is 13, then the number of the search windows $\mathrm{N} = \left\lfloor \dfrac{839}{13} \right\rfloor = 64$;

a noise temporary mean value calculating module 34, connected to the search setting module 32 and for each RACH time-domain correlation value sequence, used for seeking the peak value of time-domain correlation values in each search window thereof, and calculating a mean value of the correlation values which are less than $\alpha$ ($0 \leq \alpha \leq 1$) times of the peak value to obtain a noise temporary mean value $\widetilde{\mathrm{P}}_{i,j}^{noise}$ of the window, where $i = 1, \cdots L$, $j = 1, \cdots, N$, and $L$ refers to the number of the root sequences;

a noise power estimation mean value calculating module 36, connected to the noise temporary mean value calculating module 34 and for each RACH time-domain correlation value sequence, used for calculating a mean value of the noise temporary mean values obtained from all the search windows thereof to obtain a corresponding noise power estimation mean value: $P_i^{noise} = \dfrac{1}{N} \sum\limits_{j=1}^{N} \tilde{P}_{i,j}^{noise}$, $i = 1, \cdots, L$; and

a first detection threshold setting module 38, connected to the noise power estimation mean value calculating module 36 and when the condition that the false-alarm probability is $10^{-3}$ as an example is satisfied, according to that the distribution of the noise power is complied with the chi-square distribution, used for calculating the first predefined threshold value $\beta$($\beta > 1$) theoretically; so that for each RACH signal time-domain correlation value sequence, the corresponding first detection threshold $Th_i^1$ is: $Th_i^1 = \beta \cdot P_i^{noise}$.

The second determining unit 50 comprises:

a search module 52, for all the search windows of each RACH time-domain correlation value sequence, used for traversing each search window thereof and if there are one or more sets of continuous search windows which all have the peak values greater than the first detection threshold, recording the peak values and the locations thereof;

a second detection threshold setting module 54, connected to the search module 52 and for each RACH signal time-domain correlation value sequence, used for determining the corresponding second detection threshold $Th_{k,i}^2$ according to the recorded peak value, wherein $Th_{k,i}^2 = \gamma \cdot R_{peak}^k$, $R_{peak}^k$ refers to the maximum value of all the peak values of the search windows, $0 \leq \gamma \leq 1$, $i = 1, \cdots, L$, $L$ refers to the number of the root sequences, $k = 1, \cdots, K$, and $K$ refers to the number of sets of the continuous search windows; and

a determining module 56, connected to the second detection threshold setting module 54 and for each RACH signal time-domain correlation value sequence, used for determining whether the recorded peak value is greater than the corresponding second detection threshold $Th_{k,i}^2$ determined by the second detection threshold setting module 54 and recording a point corresponding to the peak value greater than the second detection threshold $Th_{k,i}^2$.

Compared with a random detection method and apparatus in the prior art, the detection method and the detection apparatus according to the disclosure have the advantages as follows:

the problem that the noise power is calculated inexactly under the condition of a plurality of users is effectively avoided by adopting the method of calculating the noise power estimation mean value window by window;

an accurate value of the first detection threshold is obtained through theoretical calculation according to the distribution character of the noise power, so that the requirements of a protocol to the false-alarm probability of the random access can be fully satisfied; and

the problem in the prior detection method that the false-alarm probability increases under the condition of high signal-to-noise ratio is solved through setting the second detection threshold.

As stated above, the detection method based on a random access process according to the disclosure improved the prior art from many aspects. Those skilled in the art should understand that according to practical conditions and specific requirements, these aspects can be applied in an independent or combined manner.
The above are only preferred embodiments of the disclosure and not intended to limit the protection scope of the disclosure.

**Claims**

1. A detection method based on a random access process, the method comprising:

   Performing (S102) time-domain correlation processing to a received Random Access Channel, RACH, signal and a local root sequence to obtain a plurality of RACH time-domain correlation value sequences;

   Determining (S104) a noise power estimation mean value $P_i^{noise}$ corresponding to each RACH time-domain correlation value sequence or a maximum peak value $P_i^{peak}$ of the correlation value sequence, and calculating a corresponding first detection threshold $Th_i^1$ according to the noise power estimation mean value $P_i^{noise}$ or the maximum peak value $P_i^{peak}$ of the correlation value sequence;

   for each search window of the RACH time-domain correlation value sequence, if a peak value of the RACH time-domain correlation values is greater than the corresponding first detection threshold $Th_i^1$, recording (S106) the peak value and a timing location thereof;

   for the search windows of each RACH time-domain correlation value sequence, if there are one or more sets of continuous search windows which all have the peak values greater than the first detection threshold $Th_i^1$, determining (S108) whether the peak values of the search windows are greater than a corresponding second detection threshold $Th_{k,i}^2$, wherein $Th_{k,i}^2 = \gamma \cdot R_{peak}^k$, $R_{peak}^k$ refers to a maximum value of all the peak values of the search windows, $0 \le \gamma \le 1$, $i = 1, \cdots, L$, $L$ refers to a number of the root sequences, $k = 1, \cdots, K$, and $K$ refers to a number of the sets of the continuous search windows; and

   converting (110) the timing location corresponding to the peak value greater than the corresponding second detection threshold $Th_{k,i}^2$ to be a timing adjustment quantity.

2. The method according to claim 1, wherein the step of calculating the first detection threshold $Th_i^1$ according to the noise power estimation mean value $P_i^{noise}$ is: calculating the first detection threshold according to a formula of $Th_i^1 = \beta \cdot P_i^{noise}$, where i = 1, $\cdots L$, $L$ refers to the number of the root sequences, and $\beta$ refers to a noise threshold factor greater than 1.

3. The method according to claim 1, wherein the step of calculating the first detection threshold $Th_i^1$ according to the maximum peak value $P_i^{peak}$ of the correlation value sequence is: calculating the first detection threshold according to a formula of $Th_i^1 = \lambda \cdot P_i^{peak}$, where $\lambda$ refers to a peak value threshold and a value span of $\lambda$ is $0 < \lambda < 1$.

4. The method according to claim 2, wherein the step of determining the noise power estimation mean value $P_i^{noise}$ comprises:

   dividing the RACH time-domain correlation value sequence into N search windows according to a formula of

$$N = \left\lfloor \frac{sequence\ length}{Ncs} \right\rfloor ,$$ where Ncs refers to a predefined window length parameter;

seeking the peak value of the RACH time-domain correlation values in each search window, and calculating a mean value of the RACH time-domain correlation values which are less than $\alpha$ times of the peak value to obtain a noise temporary mean value $\widetilde{P}_{i,j}^{noise}$ of the search window, where $i = 1,\cdots L$, $L$ refers to the number of the root sequences, j = 1,$\cdots$,$N$, $N$ refers to the number of the search windows, and $0 < \alpha < 1$; and

calculating a mean value of the noise temporary mean values obtained from all the search windows of the RACH time-domain correlation value sequence to obtain the noise power estimation mean value $P_i^{noise}$, where $i = 1,\cdots,L$, and $L$ refers to the number of the root sequences.

5. The method according to claim 2, wherein the value of $\beta$ is determined according to a predefined false-alarm probability and a chi-square distribution character.

6. The method according to claim 1, wherein the step of performing the time-domain correlation processing to the received RACH signal and the local root sequence to obtain a plurality of the RACH time-domain correlation value sequence comprises:

performing down-sampling processing to the received RACH signal;
performing Discrete Fourier Transformation DFT to the data after the down-sampling processing to obtain frequency-domain RACH receiving data; and
performing complex conjugate dot-multiplying of the frequency-domain RACH receiving data with the local frequency-domain root sequence and then performing Inverse Discrete Fourier Transformation IDFT to obtain a plurality of the RACH time-domain correlation value sequences.

7. A detection apparatus based on a random access process, said apparatus comprising:

a receiving unit (10), used for receiving a Random Access Channel, RACH, signal through a radio channel;
a first processing unit (20), used for performing time-domain correlation processing to the RACH signal received from the receiving unit (10) and a local root sequence to obtain a plurality of RACH time-domain correlation value sequences;
a setting unit (30), for each RACH time-domain correlation value sequence received from the first processing unit (20), used for determining a corresponding noise power estimation mean value $P_i^{noise}$ or a maximum peak value $P_i^{peak}$ of the correlation value sequence, and calculating a corresponding first detection threshold $Th_i^1$ according to the noise power estimation mean value $P_i^{noise}$ or the maximum peak value $P_i^{peak}$ of the correlation value sequence;
a first determining unit (40), for each search window of the RACH signal time-domain correlation value sequence, used for determining whether a peak value of the RACH time-domain correlation values is greater than the corresponding first detection threshold $Th_i^1$ determined by the setting unit (30), and if the determining result is yes, recording the peak value and a location thereof;
a second determining unit (50), for the search windows of each RACH signal time-domain correlation value sequence, if there are one or more sets of continuous search windows which all have the peak values greater than the corresponding first detection threshold $Th_i^1$, used for determining whether each peak value of the search windows is greater than a corresponding second detection threshold $Th_{k,i}^2$ wherein $Th_{k,i}^2 = \gamma \cdot R_{peak}^k$, $R_{peak}^k$ refers to a maximum value of the peak values of the search windows, $0 \le \gamma \le 1$, $i = 1,\cdots,L$, $L$ refers to a number of the root sequences, $k = 1,\cdots,K$, and $K$ refers to a number of the sets of the continuous search windows; and
a second processing unit (60), for each RACH signal time-domain correlation value sequence, used for converting a timing location corresponding to the peak value greater than the corresponding second detection threshold $Th_{k,i}^2$ determined by the second determining unit (50) to be a timing adjustment quantity.

8. The apparatus according to claim 7, wherein the step of calculating the first detection threshold $Th_i^1$ according to the noise power estimation mean value $P_i^{noise}$ by the setting unit (30) is: calculating the first detection threshold according to a formula of $Th_i^1 = \beta \cdot P_i^{noise}$ by the setting unit (30), where $i = 1, \cdots L$, $L$ refers to the number of the root sequences, and $\beta$ refers to a noise threshold factor greater than 1.

9. The apparatus according to claim 7, wherein the step of calculating the first detection threshold $Th_i^1$ according to the maximum peak value $P_i^{peak}$ of the correlation value sequence by the setting unit (30) is: calculating the first detection threshold according to a formula of $Th_i^1 = \lambda \cdot P_i^{peak}$ by the setting unit (30), where $\lambda$ refers to a peak value threshold and a value span of $\lambda$ is $0 < \lambda < 1$.

10. The apparatus according to claim 8, wherein the setting unit (30) comprises:

a search window setting module, used for dividing each RACH time-domain correlation value sequence into $N$ search windows according to a formula of $N = \left\lfloor \dfrac{\text{sequence length}}{Ncs} \right\rfloor$, where $Ncs$ refers to a predefined window length parameter;
a noise temporary mean value calculating module (34), for each RACH time-domain correlation value sequence, used for seeking the peak value of the RACH time-domain correlation values in each search window thereof, and calculating a mean value of the RACH time-domain correlation values which are less than $\alpha$ times of the peak value to obtain a noise temporary mean value $\tilde{\mathrm{P}}_{i,j}^{noise}$, where $i = 1, \cdots L$, and $L$ refers to the number of the root sequences, $j = 1, \cdots, N$, $N$ refers to the number of the search windows, and $0 < \alpha < 1$;
a noise power estimation mean value calculating module (36), for each RACH time-domain correlation value sequence, used for calculating a mean value of the noise temporary mean values obtained from all the search windows thereof to obtain the corresponding noise power estimation mean value $P_i^{noise}$, where $i = 1, \cdots, L$, and $L$ refers to the number of the root sequences; and
a first detection threshold setting module (38), used for determining the corresponding first detection threshold $Th_i^1$ for each RACH time-domain correlation value sequence, wherein $Th_i^1 = \beta \cdot P_i^{noise}$, $\beta$ is a factor greater than 1, $i = 1, \cdots L$, and $L$ refers to the number of the root sequences.

11. The apparatus according to claim 8, wherein the first detection threshold setting module is further used for determining the value of $\beta$ according to a predefined false-alarm probability and a chi-square distribution character.

12. The apparatus according to claim 7, wherein the second determining unit (50) comprises:

a search module (52), for each RACH time-domain correlation value sequence, used for traversing all the search windows thereof and if there are one or more sets of continuous search windows which all have the peak values greater than the corresponding first detection threshold $Th_i^1$, recording the peak values and the locations thereof;
a second detection threshold setting module (54), for each RACH time-domain correlation value sequence, used for determining the corresponding second detection threshold $Th_{k,i}^2$ according to the peak value recorded by the search module (52), wherein $Th_{k,i}^2 = \gamma \cdot R_{peak}^k$, $R_{peak}^k$ refers to the maximum value of the peak values of the search windows, $0 \le \gamma \le 1$, $i = 1, \cdots, L$, $L$ refers to the number of the root sequences, $k = 1, \cdots, K$, and $K$

refers to the number of the sets of the continuous search windows; and

a determining module (56), used for determining whether the recorded peak value is greater than the corresponding second detection threshold $Th_{k,i}^2$ determined by the second detection threshold setting module (54).

13. The apparatus according to claim 7, wherein the first processing unit (20) comprises:

a down-sampling processing module (22), used for performing down-sampling processing to the received RACH signal;

a frequency-domain data determining module (24), used for performing Discrete Fourier Transformation DFT to the data after the down-sampling processing received from the down-sampling processing module (22) to obtain frequency-domain RACH receiving data; and

a time-domain correlation value determining module (26), used for performing complex conjugate dot-multiplying of the frequency-domain RACH receiving data received from the frequency-domain data determining module (24) with the local frequency-domain root sequence and then performing Inverse Discrete Fourier Transformation IDFT to obtain a plurality of the RACH time-domain correlation value sequences.

**Patentansprüche**

1. Detektionsverfahren auf Direktzugriffsbasis, das Verfahren umfassend:

das Durchführen (S102) von Zeit-Domäne-Korrelationsverarbeitung an einem empfangenen Random Access Channel, RACH,-Signal und einer lokalen Root-Sequenz, um eine Vielzahl von RACH-Zeit-Domäne-Korrelationswertsequenzen zu erhalten;

das Bestimmen (S104) eines geschätzten Mittelwertes der Rauschleistung $P_i^{noise}$ entsprechend jeder RACH-Zeit-Domäne-Korrelationswertsequenz oder eines maximalen Spitzenwerts $P_i^{peak}$ der Korrelationswertsequenz und Berechnen eines entsprechenden ersten Detektionsschwellenwerts $Th_i^1$ gemäß dem geschätzten Mittelwert der Rauschleistung $P_i^{noise}$ oder dem maximalen Spitzenwert $P_i^{peak}$ der Korrelationswertsequenz;

für jedes Suchfenster der RACH-Zeit-Domäne-Korrelationswertsequenz, ob ein Spitzenwert der RACH-Zeit-Domäne-Korrelationswerte größer ist als der entsprechende erste Detektionsschwellenwert $Th_i^1$, das Aufzeichnen (S106) des Spitzenwerts und einer Timingstelle davon;

für das Suchfenster von jeder RACH-Zeit-Domäne-Korrelationswertsequenz, ob es einen oder mehrere Sätze ununterbrochener Suchfenster gibt, deren Spitzenwerte alle größer sind als der erste Detektionsschwellenwert $Th_i^1$, das Bestimmen (S108), ob die Spitzenwerte der Suchfenster größer sind als ein entsprechender zweiter Detektionsschwellenwert $Th_{k,i}^2$, wobei $Th_{k,i}^2 = \gamma \cdot R_{peak}^k$, $R_{peak}^k$ auf einen Höchstwert aller Spitzenwerte der Suchfenster verweist, $0 \le \gamma \le 1$, i = 1,...,L, L auf eine Anzahl der Root-Sequenzen verweist, k = K und K auf eine Anzahl der Sätze ununterbrochener Suchfenster verweist; und

das Konvertieren (110) der Timing-Stelle entsprechend dem Spitzenwert, größer als der entsprechende zweite Detektionsschwellenwert $Th_{k,i}^2$, um eine Timing-Anpassungsmenge zu erhalten.

2. Verfahren nach Anspruch 1, wobei der Schritt des Berechnens des ersten Detektionsschwellenwertes $Th_i^1$ gemäß dem geschätzten Mittelwert der Rauschleistung $P_i^{noise}$ wie folgt ist:

Berechnen des ersten Detektionsschwellenwertes gemäß einer Formel von $Th_i^1 = \beta \, P_i^{noise}$, wobei i = 1,...,L, L auf eine Anzahl der Root-Sequenzen verweist und $\beta$ auf einen Rauschschwellenwertfaktor größer als 1 verweist.

3. Verfahren nach Anspruch 1, wobei der Schritt des Berechnens des ersten Schwellenwerts $Th_i^1$ gemäß dem maximalen Spitzenwert $P_i^{peak}$ der Korrelationswertsequenz wie folgt ist: Berechnen des ersten Detektionsschwellenwertes gemäß einer Formel von $Th_i^1 = \lambda \cdot P_i^{peak}$, wo $\lambda$ auf einen Spitzenwertschwellenwert verweist und eine Wertspanne von $\lambda$ $0 < \lambda < 1$ ist.

4. Verfahren nach Anspruch 2, wobei der Schritt des Bestimmens des geschätzten Mittelwert der Rauschleistung $P_i^{noise}$ Folgendes umfasst:

Dividieren der RACH-Zeit-Domäne-Korrelationswertsequenz in $N$-Suchfenster gemäß einer Formel von $N = \left\lfloor \dfrac{\text{sequence length}}{Ncs} \right\rfloor$, wobei *Ncs* auf einen vordefinierten Fensterlängenparameter verweist;

Suchen des Spitzenwerts der RACH-Zeit-Domäne-Korrelationswerte in jedem Suchfenster und Berechnen eines Mittelwerts der RACH-Zeit-Domäne-Korrelationswerte, die weniger sind als $\alpha$ Mal des Spitzenwerts, um einen temporären Rauschmittelwert $\widetilde{P}_{i,j}^{noise}$ des Suchfensters zu erhalten, wobei *i* = 1,...,*L*, L auf die Anzahl der Root-Sequenzen verweist, j = 1,⋯,*N*, N auf die Anzahl der Suchfenster verweist und $0 < \alpha < 1$; und

Berechnen eines Mittelwerts der temporären Rauschmittelwerte, erhalten von allen Suchfenstern der RACH-Zeit-Domäne-Korrelationswertsequenz, um den geschätzten Mittelwert der Rauschleistung $P_i^{noise}$ zu erhalten, wo *i* = 1,...,*L* und L auf die Anzahl er Root-Sequenzen verweist.

5. Verfahren nach Anspruch 2, wobei der Wert von $\beta$ bestimmt wird gemäß einer vordefinierten Falschalarmwahrscheinlichkeit und einem Chi-Quadrat-Distributionszeichen.

6. Verfahren nach Anspruch 1, wobei der Schritt des Durchführens der Zeit-Domäne-Korrelationsverarbeitung an dem empfangenen RACH-Signal und der lokalen Root-Sequenz, um eine Vielzahl der RACH-Zeit-Domäne-Korrelationswertsequenz Folgendes umfasst:

das Durchführen einer Downsampling-Verarbeitung an dem empfangenen RACH-Signal;
das Durchführen einer Discrete Fourier Transformation, DFT, an den Daten nach der Downsampling-Verarbeitung, um Frequenz-Domäne-RACH-Empfangsdaten; und
das Durchführen einer komplexen konjugierten Dot-Multiplikation der Frequenz-RACH-Empfangsdaten mit der lokalen Frequenz-Domäne-Root-Sequenz und anschließendes Durchführen einer Inverse Discrete Fourier Transformation, IDFT, um eine Vielzahl der RACH-Zeit-Domäne-Korrelationswertsequenzen zu erhalten.

7. Detektionsvorrichtung auf Direktzugriffsbasis, die Vorrichtung umfassend:

eine Empfangseinheit (10), verwendet zum Empfangen eines Random Access Channel, RACH,-Signals durch einen Funkkanal;
eine erste Verarbeitungseinheit (20), verwendet zur Durchführung einer Zeit-Domäne-Korrelationsverarbeitung an dem RACH-Signal, empfangen von der Empfangseinheit (10) und einer lokalen Root-Sequenz, um eine Vielzahl von RACH-Zeit-Domäne-Korrelationswertsequenzen zu erhalten;
eine Einstellungseinheit (30) für jede RACH-Zeit-Domäne-Korrelationswertsequenz, empfangen von der ersten Verarbeitungseinheit (20), verwendet zum Bestimmen eines entsprechenden geschätzten Mittelwerts der Rauschleistung $P_i^{noise}$ oder eines maximalen Spitzenwerts $P_i^{peak}$ der Korrelationswertsequenz und Berechnen eines entsprechenden Detektionsschwellenwerts $Th_i^1$ gemäß dem geschätzten Mittelwert der Rauschenleistung $P_i^{noise}$ oder des maximalen Spitzenwerts $P_i^{peak}$ der Korrelationswertsequenz;

eine erste Bestimmungseinheit (40) für jedes Suchfenster der RACH-Signal-Zeit-Domäne-Korrelationswertsequenz, verwendet zum Bestimmen, ob ein Spitzenwert des RACH-Zeit-Domäne-Korrelationswerts größer ist als der entsprechende erste Detektionsschwellenwert $Th_i^1$, bestimmt von der Einstellungseinheit (30), und wenn das Bestimmungsergebnis ja ist, das Aufzeichnen des Spitzenwerts und eines Standorts davon;
eine zweite Bestimmungseinheit (50) für die Suchfenster von jeder RACH-Signal-Zeit-Domäne-Korrelationswertsequenz, ob es einen oder mehrere Sätze ununterbrochener Suchfenster gibt, von denen alle die Schwellenwerte größer als der entsprechende erste Detektionsschwellenwert $Th_i^1$ haben, verwendet zum Bestimmen, ob jeder Spitzenwert der Suchfenster größer ist als ein entsprechender zweiter Detektionsschwellenwert $Th_{k,i}^2$, wobei $Th_{k,i}^2 = \gamma \cdot R_{peak}^k$, $R_{peak}^k$ auf einen Höchstwert der Spitzenwerte der Suchfenster verweist, $0 \leq \gamma \leq 1$, $i = 1,...,L$, L auf eine Anzahl der Root-Sequenzen verweist, $k = K$ und K auf eine Anzahl der Sätze ununterbrochener Suchfenster verweist; und
eine zweite Verarbeitungseinheit (60) für jede RACH-Signalzeit-Domäne-Korrelationswertsequenz, verwendet zum Konvertieren einer Timing-Stelle entsprechend dem Spitzenwert größer als der entsprechende zweite Detektionsschwellenwert $Th_{k,i}^2$, bestimmt von der zweiten Bestimmungseinheit (50) dahin gehend, dass sie eine Timing-Anpassungsmenge ist.

8.  Vorrichtung nach Anspruch 7, wobei der Schritt des Berechnens des ersten Detektionsschwellenwerts $Th_i^1$ gemäß dem geschätzten Mittelwert der Rauschleistung $P_i^{noise}$ von der Einstellungseinheit (30) wie folgt ist: Berechnen des ersten Detektionsschwellenwerts gemäß der Formel $Th_i^1 = \beta \; P_i^{noise}$ durch die Einstellungseinheit (30), wobei $i = 1,...,L$, L auf eine Anzahl der Root-Sequenzen verweist und $\beta$ auf einen Rauschschwellenwertfaktor größer als 1 verweist.

9.  Vorrichtung nach Anspruch 7, wobei der Schritt des Berechnens des ersten Detektionsschwellenwerts $Th_i^1$ gemäß dem maximalen Spitzenwert $P_i^{peak}$ der Korrelationswertsequenz durch die Einstellungseinheit (30) wie folgt ist: Berechnen des ersten Detektionsschwellenwerts gemäß der Formel $Th_i^1 = \lambda \cdot P_i^{peak}$ durch die Einstellungseinheit (30), wobei $\lambda$ auf einen Spitzenwertschwellenwert verweist und eine Wertspanne von $\lambda$ $0 < \lambda < 1$ ist.

10. Vorrichtung nach Anspruch 8, wobei die Einstellungseinheit (30) Folgendes umfasst:

ein Suchfenster-Einstellungsmodul, verwendet zum Teilen jeder RACH-Zeit-Domäne-Korrelationswertsequenz in N Suchfenster gemäß der Formel $N = \left\lfloor \dfrac{\text{sequence length}}{Ncs} \right\rfloor$, wobei *Ncs* auf einen vordefinierten Fensterlängenparameter verweist;
ein Berechnungsmodul (34) eines temporären Rauschmittelwerts für jede RACH-Zeit-Domäne-Korrelationswertsequenz, verwendet zum Suchen des Spitzenwerts der RACH-Zeit-Domäne-Korrelationswerte in jedem Suchfenster davon und Berechnen eines Mittelwerts der RACH-Zeit-Domäne-Korrelationswerte, die weniger sind als $\alpha$ Mal der Spitzenwert, um einen temporären Rauschmittelwert $\widetilde{P}_{i,j}^{noise}$ zu erhalten, wo $i = 1,...L$, und L auf die Anzahl der Root-Sequenzen verweist, $j = 1,\cdots,N$, N auf die Anzahl der Suchfenster verweist und $0 < \alpha < 1$;
ein Berechnungsmodul (36) eines geschätzten Mittelwerts RauschenLeistung für jede RACH-Zeit-Domäne-Korrelationswertsequenz, verwendet zum Berechnen eines Mittelwerts der temporären Rauschmittelwerte, erhalten von allen Suchfenstern davon, um den entsprechenden geschätzten Mittelwert der Rauschleistung $P_i^{noise}$ zu erhalten, wobei $i = 1,...L$, und L auf die Anzahl der Root-Sequenzen verweist; und
ein Einstellungsmodul (38) des ersten Detektionsschwellenwerts, verwendet zum Bestimmen des entsprechenden ersten Detektionsschwellenwerts $Th_i^1$ für jede RACH-Zeit-Domäne-Korrelationswertsequenz, wobei

$$Th_i^1 = \beta \ P_i^{noise}$$ , $\beta$ ein Faktor größer als 1 ist, $i$ = 1,...$L$, und L auf die Anzahl der Root-Sequenzen verweist.

**11.** Vorrichtung nach Anspruch 8, wobei das Einstellungsmodul des ersten Detektionsschwellenwerts ferner verwendet wird zum Bestimmen des Werts von $\beta$ gemäß einer vordefinierten Falschalarmwahrscheinlichkeit und eines Chi-Quadrat-Distributionszeichens.

**12.** Vorrichtung nach Anspruch 7, wobei die zweite Bestimmungseinheit (50) Folgendes umfasst:

ein Suchmodul (52) für jede RACH-Zeit-Domäne-Korrelationswertsequenz, verwendet zum Durchlaufen aller der Suchfenster davon und wenn es einen oder mehrere Sätze kontinuierlicher Suchfenster gibt, die alle die Spitzenwerte größer als der entsprechende erste Detektionsschwellenwert $Th_i^1$ haben, das Aufzeichnen der Spitzenwerte und der Standorte davon;

ein Einstellungsmodul (54) des zweiten Detektionsschwellenwerts für jede RACH-Zeit-Domäne Korrelationswertsequenz, verwendet zum Bestimmen des entsprechenden zweiten Detektionsschwellenwerts $Th_{k,i}^2$ ge-mäß dem Spitzenwert, aufgezeichnet von dem Suchmodul (52), wobei $Th_{k,i}^2 = \gamma \cdot R_{peak}^k$ , $R_{peak}^k$ auf den Höchstwert der Spitzenwerte der Suchfenster verweist, $0 \le \gamma \le 1$, $i$ = 1,...,$L$, L auf die Anzahl der Root-Sequenzen verweist, $k$ = Kund K auf eine Anzahl der Sätze kontinuierlicher Suchfenster verweist; und

ein Bestimmungsmodul (56), verwendet zum Bestimmen, ob der aufgezeichnete Spitzenwert größer ist als der entsprechende zweite Detektionsschwellenwert $Th_{k,i}^2$, bestimmt von dem Einstellungsmodul (54) des zweiten Detektionsschwellenwerts.

**13.** Vorrichtung nach Anspruch 7, wobei die erste Verarbeitungseinheit (20) Folgendes umfasst:

ein Downsampling-Verarbeitungsmodul (22), verwendet zum Durchführen von Downsampling-Verarbeitung an dem empfangenen RACH-Signal;

ein Frequenz-Domäne-Datenbestimmungsmodul (24), verwendet zum Durchführen von Discrete Fourier Transformation, DFT, an den Daten nach der Downsampling-Verarbeitung, empfangen von dem Downsampling-Verarbeitungsmodul (22), um Frequenz-Domäne-RACH-Empfangsdaten zu erhalten; und

ein Zeit-Domäne-Korrelationswertbestimmungsmodul (26), verwendet zum Durchführen komplexer konjugaler Dot-Multiplikation der Frequenz-Domäne-RACH-Empfangsdaten, empfangen von dem Frequenz-Domäne-Datenbestimmungsmodul (24) mit der lokalen Frequenz-Domäne-Root-Sequenz und anschließend Durchführen von Inverse Discrete Fourier Transformation, IDFT, um eine Vielzahl der RACH-Zeit-Domäne-Korrelationswertsequenzen zu erhalten.

## Revendications

**1.** Procédé de détection basée sur un processus d'accès aléatoire, le procédé comprenant :

la réalisation (S102) d'un traitement de corrélation dans le domaine temporel sur un signal de canal d'accès aléatoire, RACH, reçu et une séquence racine locale pour obtenir une pluralité de séquences de valeurs de corrélation dans le domaine temporel du RACH ;

la détermination (S104) d'une valeur moyenne d'estimation de puissance de bruit $P_i^{noise}$ correspondant à chaque séquence de valeurs de corrélation dans le domaine temporel du RACH ou d'une valeur de crête maximale $P_i^{peak}$ de la séquence de valeurs de corrélation, et le calcul d'un premier seuil de détection corres-pondant $Th_i^1$ en fonction de la valeur moyenne d'estimation de puissance de bruit $P_i^{noise}$ ou de la valeur de crête maximale $P_i^{peak}$ de la séquence de valeurs de corrélation ;

pour chaque fenêtre de recherche de la séquence de valeurs de corrélation dans le domaine temporel du RACH, si une valeur de crête des valeurs de corrélation dans le domaine temporel du RACH est supérieure au premier seuil de détection correspondant $Th_i^1$, l'enregistrement (S106) de la valeur de crête et de son emplacement dans le temps ;

pour les fenêtres de recherche de chaque séquence de valeurs de corrélation dans le domaine temporel du RACH, s'il existe un ou plusieurs ensembles de fenêtres de recherche continues qui ont toutes des valeurs de crête supérieures au premier seuil de détection $Th_i^1$, le fait de déterminer (S108) si les valeurs de crête des fenêtres de recherche sont supérieures ou non à un second seuil de détection correspondant $Th_{k,i}^2$, dans lequel $Th_{k,i}^2 = \gamma \cdot R_{peak}^k$, $R_{peak}^k$ représente une valeur maximale de toutes les valeurs de crête des fenêtres de recherche, $0 \leq \gamma \leq 1$, i = 1,...,L, $L$ représente le nombre des séquences racines, k = 1,...,K, et K représente le nombre d'ensembles de fenêtres de recherche continues ; et

la conversion (110) de l'emplacement dans le temps correspondant à la valeur de crête supérieure au second seuil de détection correspondant $Th_{k,i}^2$ comme étant une quantité de réglage de temps.

2. Procédé selon la revendication 1, dans lequel l'étape de calcul du premier seuil de détection $Th_i^1$ en fonction de la valeur moyenne d'estimation de puissance de bruit $P_i^{noise}$ consiste en : le calcul du premier seuil de détection selon une formule $Th_i^1 = \beta \cdot P_i^{noise}$, où i = 1,...,L, L représente le nombre des séquences racines, et β représente un facteur seuil de bruit supérieur à 1.

3. Procédé selon la revendication 1, dans lequel l'étape de calcul du premier seuil de détection $Th_i^1$ en fonction de la valeur de crête maximale $P_i^{peak}$ de la séquence de valeurs de corrélation consiste en : le calcul du premier seuil de détection selon une formule $Th_i^1 = \lambda \cdot P_i^{noise}$, où $\lambda$ représente un seuil de valeur de crête et la plage de valeurs de $\lambda$ est 0 < $\lambda$ < 1.

4. Procédé selon la revendication 2, dans lequel l'étape de détermination de la valeur moyenne d'estimation de puissance de bruit $P_i^{noise}$ comprend :

la division de la séquence de valeurs de corrélation dans le domaine temporel du RACH en N fenêtres de recherche selon une formule $N = \left\lfloor \dfrac{longueur\ de\ la\ séquence}{Ncs} \right\rfloor$, ou *Ncs* représente un paramètre prédéfini de longueur de fenêtre ;

la recherche de la valeur de crête des valeurs de corrélation dans le domaine temporel du RACH dans chaque fenêtre de recherche, et le calcul d'une valeur moyenne des valeurs de corrélation dans le domaine temporel du RACH qui sont inférieures à $\alpha$ fois la valeur de crête pour obtenir une valeur moyenne temporaire de bruit $\tilde{P}_{i,j}^{noise}$ de la fenêtre de recherche, où *i* = 1,...,L, L représente le nombre des séquences racines, *j* = 1,...,N, N représente le nombre des fenêtres de recherche, et 0 < $\alpha$ < 1 ; et

le calcul d'une valeur moyenne des valeurs moyennes temporaires de bruit obtenues à partir de toutes les fenêtres de recherche de la séquence de valeurs de corrélation dans le domaine temporel du RACH pour obtenir la valeur moyenne d'estimation de puissance de bruit $P_i^{noise}$, où *i* = 1,..., L, et L représente le nombre des séquences racines.

5. Procédé selon la revendication 2, dans lequel la valeur de $\beta$ est déterminée en fonction d'une probabilité de fausse alerte prédéfinie et d'un caractère de distribution de khi carré.

6. Procédé selon la revendication 1, dans lequel l'étape de réalisation du traitement de corrélation dans le domaine temporel sur le signal RACH reçu et la séquence racine locale pour obtenir une pluralité de séquences de valeurs de corrélation dans le domaine temporel du RACH comprend :

la réalisation d'un traitement de sous-échantillonnage sur le signal RACH reçu ;
la réalisation d'une transformée de Fourier discrète DFT sur les données après le traitement de sous-échantillonnage pour obtenir des données de réception RACH dans le domaine fréquentiel ; et
la réalisation d'un produit scalaire à conjugué complexe des données de réception RACH dans le domaine fréquentiel avec la séquence racine locale dans le domaine fréquentiel puis la réalisation d'une transformée de Fourier discrète inverse IDFT pour obtenir une pluralité de séquences de valeurs de corrélation dans le domaine temporel du RACH.

7. Appareil de détection basé sur un processus d'accès aléatoire, ledit appareil comprenant :

une unité de réception (10), utilisée pour recevoir un signal de canal d'accès aléatoire, RACH, par un canal radio ;
une première unité de traitement (20), utilisée pour réaliser un traitement de corrélation dans le domaine temporel sur le signal RACH reçu de l'unité de réception (10) et une séquence racine locale pour obtenir une pluralité de séquences de valeurs de corrélation dans le domaine temporel du RACH ;
une unité de paramétrage (30), pour chaque séquence de valeurs de corrélation dans le domaine temporel du RACH reçue de la première unité de traitement (20), utilisée pour déterminer une valeur moyenne d'estimation de puissance de bruit correspondante $P_i^{noise}$ ou une valeur de crête maximale $P_i^{peak}$ de la séquence de valeurs de corrélation, et calculer un premier seuil de détection correspondant $Th_i^1$ en fonction de la valeur moyenne d'estimation de puissance de bruit $P_i^{noise}$ ou de la valeur de crête maximale $P_i^{peak}$ de la séquence de valeurs de corrélation ;
une première unité de détermination (40), pour chaque fenêtre de recherche de la séquence de valeurs de corrélation dans le domaine temporel du signal RACH, utilisée pour déterminer si une valeur de crête des valeurs de corrélation dans le domaine temporel du RACH est supérieure ou non au premier seuil de détection correspondant $Th_i^1$ déterminé par l'unité de paramétrage (30), et si le résultat de la détermination est positif, enregistrer la valeur de crête et son emplacement ;
une seconde unité de détermination (50), pour les fenêtres de recherche de chaque séquence de valeurs de corrélation dans le domaine temporel du signal RACH, s'il existe un ou plusieurs ensembles de fenêtres de recherche continues qui ont toutes des valeurs de crête supérieures au premier seuil de détection correspondant $Th_i^1$, utilisée pour déterminer si chaque valeur de crête des fenêtres de recherche est supérieure ou non à un second seuil de détection correspondant $Th_{k,i}^2$ dans lequel $Th_{k,i}^2 = \gamma \cdot R_{peak}^k$, $R_{peak}^k$ représente une valeur maximale des valeurs de crête des fenêtres de recherche, $0 \leq \gamma \leq 1$, i = 1,..., L, L représente le nombre des séquences racines, k = 1,...,K, et K représente le nombre des ensembles de fenêtres de recherche continues ; et
une seconde unité de traitement (60), pour chaque séquence de valeurs de corrélation dans le domaine temporel du signal RACH, utilisée pour convertir un emplacement dans le temps correspondant à la valeur de crête supérieure au second seuil de détection correspondant $Th_{k,i}^2$ déterminé par la seconde unité de détermination (50) comme étant une quantité de réglage de temps.

8. Appareil selon la revendication 7, dans lequel l'étape de calcul du premier seuil de détection $Th_i^1$ en fonction de la valeur moyenne d'estimation de puissance de bruit $P_i^{noise}$ par l'unité de paramétrage (30) consiste en : le calcul du premier seuil de détection selon une formule $Th_i^1 = \beta \cdot P_i^{noise}$ par l'unité de paramétrage (30), où i = 1,...,L, L représente le nombre des séquences racines, et $\beta$ représente un facteur seuil de bruit supérieur à 1.

9. Appareil selon la revendication 7, dans lequel l'étape de calcul du premier seuil de détection $Th_i^1$ en fonction de la valeur de crête maximale $P_i^{peak}$ de la séquence de valeurs de corrélation par l'unité de paramétrage (30) consiste en : le calcul du premier seuil de détection selon une formule $Th_i^1 = \lambda \cdot P_i^{noise}$ par l'unité de paramétrage (30), où $\lambda$ représente un seuil de valeur de crête et la plage de valeurs de $\lambda$ est 0 < A < 1.

**10.** Appareil selon la revendication 8, dans lequel l'unité de paramétrage (30) comprend :

un module de paramétrage de fenêtre de recherche, utilisé pour diviser chaque séquence de valeurs de corrélation dans le domaine temporel du RACH en N fenêtres de recherche selon une formule

$$N = \left\lfloor \frac{longueur\ de\ la\ séquence}{Ncs} \right\rfloor,$$ où *Ncs* représente un paramètre prédéfini de longueur de fenêtre ;

un module de calcul de valeur moyenne temporaire de bruit (34), pour chaque séquence de valeurs de corrélation dans le domaine temporel du RACH, utilisé pour chercher la valeur de crête des valeurs de corrélation dans le domaine temporel du RACH dans chaque fenêtre de recherche de celles-ci, et calculer une valeur moyenne des valeurs de corrélation dans le domaine temporel du RACH qui sont inférieures à $\alpha$ fois la valeur de crête pour obtenir une valeur moyenne temporaire de bruit $\tilde{P}_{i,j}^{noise}$, où *i* = 1,..., *L*, et *L* représente le nombre des séquences racines, *j* = 1, ..., *N*, *N* représente le nombre des fenêtres de recherche, et 0 < $\alpha$ < 1 ;

un module de calcul de valeur moyenne d'estimation de puissance de bruit (36), pour chaque séquence de valeurs de corrélation dans le domaine temporel du RACH, utilisé pour calculer une valeur moyenne des valeurs moyennes temporaires de bruit obtenues à partir de toutes les fenêtres de recherche de celles-ci pour obtenir la valeur moyenne d'estimation de puissance de bruit correspondante $P_i^{noise}$, où *i* = 1,...,*L*, et *L* représente le nombre des séquences racines ; et

un premier module de paramétrage de seuil de détection (38), utilisé pour déterminer le premier seuil de détection correspondant $Th_i^1$ pour chaque séquence de valeurs de corrélation dans le domaine temporel du RACH, dans lequel $Th_i^1 = \beta \cdot P_i^{noise}$, $\beta$ est un facteur supérieur à 1, *i* = 1,...*L*, et *L* représente le nombre des séquences racines.

**11.** Appareil selon la revendication 8, dans lequel le premier module de paramétrage de seuil de détection est utilisé en outre pour déterminer la valeur de $\beta$ en fonction d'une probabilité de fausse alerte prédéfinie et d'un caractère de distribution de khi carré.

**12.** Appareil selon la revendication 7, dans lequel la seconde unité de détermination (50) comprend :

un module de recherche (52), pour chaque séquence de valeurs de corrélation dans le domaine temporel du RACH, utilisé pour traverser toutes les fenêtres de recherche de celles-ci et s'il existe un ou plusieurs ensembles de fenêtres de recherche continues qui ont toutes des valeurs de crête supérieures au premier seuil de détection correspondant $Th_i^1$, enregistrer les valeurs de crête et leurs emplacements ;

un second module de paramétrage de seuil de détection (54), pour chaque séquence de valeurs de corrélation dans le domaine temporel du RACH, utilisé pour déterminer le second seuil de détection correspondant $Th_{k,i}^2$ en fonction de la valeur de crête enregistrée par le module de recherche (52), dans lequel $Th_{k,i}^2 = \gamma \cdot R_{peak}^k$,

$R_{peak}^k$ représente la valeur maximale des valeurs de crête des fenêtres de recherche, $0 \leq \gamma \leq 1$, i = 1,...,L, *L* représente le nombre des séquences racines, k = 1,...,K, et *K* représente le nombre des ensembles de fenêtres de recherche continues ; et

un module de détermination (56), utilisé pour déterminer si la valeur de crête enregistrée est supérieure ou non au second seuil de détection correspondant $Th_{k,i}^2$ déterminé par le second module de paramétrage de seuil de détection (54).

**13.** Appareil selon la revendication 7, dans lequel la première unité de traitement (20) comprend :

un module de traitement de sous-échantillonnage (22), utilisé pour réaliser un traitement de sous-échantillonnage sur le signal RACH reçu ;

un module de détermination de données dans le domaine fréquentiel (24), utilisé pour effectuer une transformée de Fourier discrète DFT sur les données après le traitement de sous-échantillonnage reçu du module de traitement de sous-échantillonnage (22) pour obtenir des données de réception RACH dans le domaine fréquentiel ; et

un module de détermination de valeurs de corrélation dans le domaine temporel (26), utilisé pour effectuer un produit scalaire à conjugué complexe des données de réception RACH dans le domaine fréquentiel reçues du module de détermination de données dans le domaine fréquentiel (24) avec la séquence racine locale dans le domaine fréquentiel et effectuer ensuite une Transformée de Fourier discrète inverse IDFT pour obtenir une pluralité de séquences de valeurs de corrélation dans le domaine temporel du RACH.

Fig. 1

Start

performing time-domain correlation processing to a received RACH signal and obtaining a plurality of RACH time-domain correlation value sequences — S102

determining the first detection threshold — S104

S106

determining whether a peak value of the RACH time-domain correlation values in the search window is greater than the first detection threshold

No

Yes

S108

determining a second detection threshold and determining whether there is a peak value satisfying a predefined determining criterion

No

Yes

converting the timing location corresponding to the peak value satisfying predefined determining criterion to be a timing adjustment quantity — S110

End

Fig. 2

```
┌──────────────┐        ┌──────────┐        ┌────────┐        ┌──────────┐
│ generating a │ ────►  │          │ ────►  │        │        │          │
│  preamble    │ ────►  │subcarrier│ ────►  │        │ ────►  │inserting │ ────►
│ sequence of a│   ⋮    │ mapping  │   ⋮    │  IDFT  │        │   CP     │
│    user      │ ────►  │          │ ────►  │        │        │          │
└──────────────┘        └──────────┘        └────────┘        └──────────┘
```

Fig. 3

```
┌──────────────────────────────────────────────────────────────┐   S301
│ performing down-sampling processing to the received RACH signal│
│ part and performing DFT transformation to obtain a frequency-  │
│              domain RACH signal                                 │
└──────────────────────────────────────────────────────────────┘
                              │
                              ▼
┌──────────────────────────────────────────────────────────────┐   S302
│ calculating an RACH time-domain correlation value sequence after│
│ time-domain correlation of an RACH signal and all local root   │
│              sequences                                          │
└──────────────────────────────────────────────────────────────┘
                              │
                              ▼
┌──────────────────────────────────────────────────────────────┐   S303
│ calculating a noise power estimation mean value and a first    │
│ detection threshold of each RACH time-domain correlation value │
│ sequence                                                        │
└──────────────────────────────────────────────────────────────┘
                              │
                              ▼
┌──────────────────────────────────────────────────────────────┐   S304
│ traversing all search windows of each RACH time-domain         │
│ correlation value sequence and determining whether a peak value│
│ thereof satisfies the first detection threshold               │
└──────────────────────────────────────────────────────────────┘
                              │
                              ▼
┌──────────────────────────────────────────────────────────────┐   S305
│ determining whether a system detects an RACH signal and the    │
│ timing location according to the predefined determining        │
│ criterion                                                       │
└──────────────────────────────────────────────────────────────┘
                              │
                              ▼
┌──────────────────────────────────────────────────────────────┐   S306
│ determining the time-domain location corresponding to detected │
│ preamble code and providing uplink synchronizing time          │
│ information for a user transmitting the code                   │
└──────────────────────────────────────────────────────────────┘
                              │
                              ▼
┌──────────────────────────────────────────────────────────────┐   S307
│ completing the random access detection process of the cell     │
└──────────────────────────────────────────────────────────────┘
```

Fig. 4

```
┌─────────────────────────┐
│     Receiving unit      │
│           10            │
└─────────────────────────┘
             │
             ▼
┌─────────────────────────┐
│  First processing unit  │
│           20            │
└─────────────────────────┘
             │
             ▼
┌─────────────────────────┐
│      Setting unit       │
│           30            │
└─────────────────────────┘
             │
             ▼
┌─────────────────────────┐
│  First determining unit │
│           40            │
└─────────────────────────┘
             │
             ▼
┌─────────────────────────┐
│   Second determining    │
│       unit 50           │
└─────────────────────────┘
             │
             ▼
┌─────────────────────────┐
│   Second processing     │
│       unit 60           │
└─────────────────────────┘
```

Fig. 5

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1605710 A
- US 6167037 A
- US 2008165903 A